# EUROPEAN PATENT SPECIFICATION

(11) **EP 2 652 414 B1**
(45) Date of publication and mention of the grant of the patent: **18.11.2015**
(21) Application number: 11768205.4
(22) Date of filing: 22.09.2011
(51) Int. Cl.: F24D 17/00, H02S 40/44, F24J 2/36, F24J 2/04

(54) **PORTABLE SOLAR POWER GENERATOR AND WATER HEATING SYSTEM**
TRAGBARER SOLARSTROMGENERATOR UND WASSERERWÄRMUNGSSYSTEM
GÉNÉRATEUR D'ÉNERGIE SOLAIRE PORTATIF ET SYSTÈME DE CHAUFFAGE D'EAU

(30) Priority: 15.12.2010 US 969322
(43) Date of publication of application: 23.10.2013
(73) Proprietor: The Boeing Company, Chicago, IL 60606-2016 (US)
(72) Inventor: LEE, Bailey, Lakewood, California 90715 (US)
(74) Representative: Howick, Nicholas Keith
(86) International application number: PCT/US2011/052833
(87) International publication number: WO 2012/082206

(56) References cited:
- GB-A- 2 462 174
- US-A1- 2002 046 764
- US-A1- 2008 202 498

## Description

### Background

Many remote bases or other facilities utilize fuel cells for the generation of power. For example, in military applications, forward operating bases are often set up at remote locations not serviced by a fixed power grid. Fuel cells provide one means for supplying the necessary power to sustain the base operations. Similarly, in civilian applications such as disaster response scenarios, power generation is a critical consideration for response teams since permanent power grids and heated water are commonly unavailable. Like power, heated water is another integral component for sustaining operations at many remote locations. Many remote locations do not have the functional infrastructure to provide electricity or heated water.

Due to the lack of suitable infrastructure at many of these locations, fuel must be transported to the forward operating bases or emergency response locations, often over great distances. Transporting fuel via aircraft, trains, ships, trucks and/or other vehicles is a costly and often dangerous operation. In the military context, for example, fuel makes up a significant portion of the cargo that is transported to remote bases. The convoys associated with these shipments not only operate at a significant expense, but also expose personnel to hazards associated with operating in hostile environments.

It is with respect to these considerations and others that the disclosure made herein is presented.

US patent application US 2002/046764 A1 describes a flexible solar power assembly which includes a flexible photovoltaic device attached to a flexible thermal solar collector. The solar power assembly can be rolled up for transport and then unrolled for installation on a surface, such as the roof or side wall of a building or other structure, by use of adhesive and/or other types of fasteners.

### Summary

It should be appreciated that this Summary is provided to introduce a selection of concepts in a simplified form that are further described below in the Detailed Description. This Summary is not intended to be used to limit the scope of the claimed subject matter.

Methods and systems described herein provide for the creation of power and heated water utilizing a portable solar power generator and water heating system. According to one aspect of the disclosure provided herein, solar radiation is used to heat a liquid filled bladder. The heated liquid is used to heat stored water via a heat exchanger. The heated water is provided for use within these and other systems, or for general consumption.

According to another aspect, a portable solar power generator and water heating system includes one or more photovoltaic collectors and one or more batteries. Sunlight (solar radiation) is collected by the one or more photovoltaic collectors. The collected solar radiation is converted to power for storage in a battery. The power is provided for use within these and other systems, heating water, or for general consumption.

According to yet another aspect, both the liquid filled bladder and one or more photovoltaic collectors and batteries are utilized. Accordingly, heated water and power are provided for use within these and other systems, or for general consumption.

The features, functions, and advantages that have been discussed can be achieved independently in various embodiments of the present invention or may be combined in yet other embodiments, further details of which can be seen with reference to the following description and drawings.

### Brief Description Of The Drawings

FIGURE 1 is a block diagram showing a portable solar power generator and water heating system in accordance with some embodiments;
FIGURE 2 is a diagram showing a portable solar power generator and water heating system in accordance with some embodiments;
FIGURE 3 is a diagram showing a portable solar power generation system not in accordance with the present invention;
FIGURE 4 is a flow diagram showing aspects of one illustrative process disclosed herein for generating power and providing heated water from solar radiation, according to one embodiment presented herein; and
FIGURE 5 is a flow diagram showing aspects of one illustrative process disclosed herein for generating power from solar radiation, according to one embodiment presented herein.

### Detailed Description

The following detailed description is directed to the method and system as defined in claims 1 and 6, for generating power and heated water from solar radiation in a portable manner. As discussed briefly above, transporting fuel to forward operating bases and other remote locations is a costly, inefficient, and often dangerous process. Utilizing the concepts and technologies described herein, solar radiation is used to generate power and create heated water for consumption.

Throughout this disclosure, the various embodiments will be described with respect to use with a military forward operating base, such as would be used by military forces on a temporary or semi-permanent basis at a remote location that does not have permanent infrastructure capable of providing power and heated water. However, it should be understood that the disclosure provided herein is equally applicable to any type of application in which it is desirable to generate power and heated water in a portable and efficient manner that decreases the quantity of fuel that is required to be transported to the use location from a source location. Similarly, the various embodiments are also suitable for any implementations in which the transportation of resources is not an issue, but in which it is desirable to operate at a lower cost or weight, as will be described in detail below.

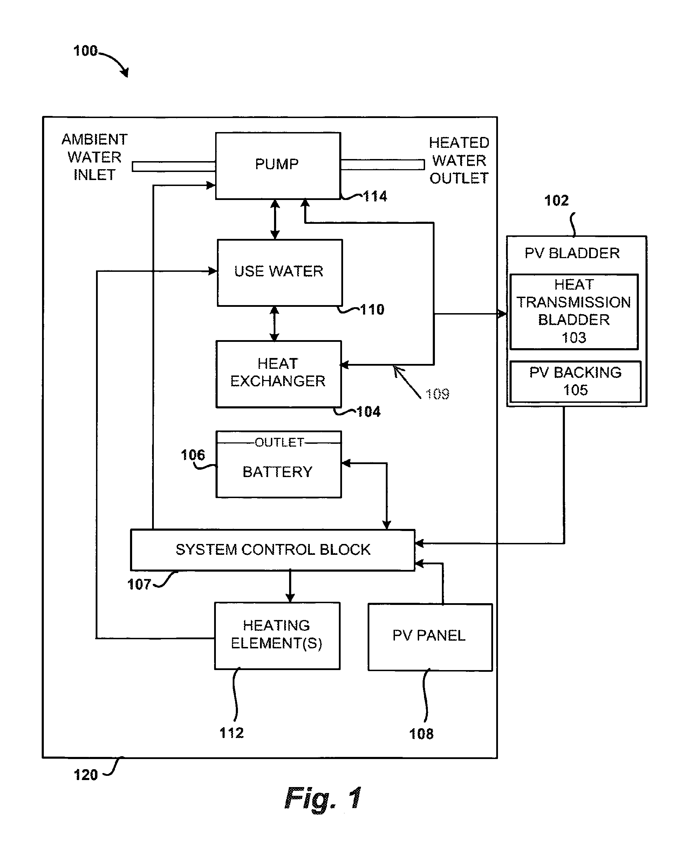

In the following detailed description, references are made to the accompanying drawings that form a part hereof, and which are shown by way of illustration, specific embodiments, or examples. Referring now to the drawings, in which like numerals represent like elements through the several figures, the portable generation of power and heated water via solar radiation, will be described. FIGURE 1 illustrates a portable solar power generator and water heating system 100.

The portable solar power generator and water heating system 100 is a portable system that may provide power and heated water for consumption. The concepts described herein allow for the rapid deployment of a portable solar power generator and water heating system 100 at a remote location. The solar power generator and water heating system 100 may be of a size and weight that is capable of being transported by several individuals. The entire system fits easily on a conventional pallet that can be carried to the optimal location and deployed. Deployment of the system may include unrolling a photovoltaic (PV) bladder 102, which will be described in detail below, and connecting inlet and outlet water connections, as well as any supplemental power that may be used if the power generated by the system is not used to entirely power the system. Throughout this disclosure, embodiments will be described in which the PV bladder 102 is "rolled" or "unrolled." It should be appreciated that the terms "rolled" or "unrolled" may be interchanged with the terms "folded" or "un-folded" or any other terms related to stowing or deploying an item.

The solar power generator and water heating system 100 includes the PV bladder 102. As will be described in detail below, the PV bladder 102 absorbs solar radiation, for example, infrared and visible light, and uses the absorbed radiation to heat a fluid within the bladder as well as to generate electrical power. The heated fluid within the bladder, or heat transfer fluid 109 as it is referred to herein, is then used to heat stored water for consumption at the remote location or location of use. The PV bladder 102 includes two primary components, a heat transmission bladder 103 and a PV collector backing 105. The heat transmission bladder 103 is a flexible container through which heat transfer fluid 109 may be routed to collect heat from the absorbed solar radiation. The heat transmission bladder may be created from any suitable material that can be rolled or folded and that is transparent or translucent to allow for the transmission of visible light.

The heat transmission bladder 103 may include one or more channels for routing a heat transfer fluid 109 into and through the heat transmission bladder 103. The heat transmission bladder 103 may be made of a fluoride polymer, for example, ethylene tetrafluroethylene (ETFE). The fluoride polymer used to create the heat transmission bladder 103 may be a fluoride polymer that tends to transmit greater than 50% of the visible spectrum of light through the fluoride polymer. Since the heat transmission bladder 103 resides on top of the PV backing 105 of the PV bladder 102 and is transparent or translucent, the PV bladder 102 can utilize infrared radiation for heating the heat transfer fluid and visible light for power generation. The heat transmission bladder 103 and the PV backing 105 of the PV bladder 102 may be attached or integrated in any suitable manner that allows sunlight to be received by both the heat transmission bladder 103 and the PV backing 105.

The heat transmission bladder 103 absorbs infrared radiation through the heat transfer fluid 109 contained in the heat transmission bladder 103. The heat transfer fluid 109 in the heat transmission bladder 103 may be any fluid capable of being heated by solar radiation, for example, water. The heat transmission bladder 103 circulates the heat transfer fluid 109 through a heat exchanger 104 using preferably a pump 114 that may be controlled by a system control block 107. The heat exchanger 104 transfers heat received from the heat transfer fluid 109 to use water 110 in order to heat the use water 110 for subsequent consumption. Pump 114 may be used to provide water pressure to heated use water 110 for extraction and use. The pump 114 may also be used to transfer ambient water to the use water 110 for subsequent heating and be used to transfer heated water for use via a heated water outlet.

The PV backing 105 of the PV bladder 102 may be made from a variety of durable and flexible materials configured with photovoltaic cells for the creation of electrical power from the collected solar radiation. Example materials include but are not limited to, copper indium gallium selenide (CIGS), copper indium selenide (CIS), tandum junction amorphous silicon (a-Si), cadmium telluride (CdTe), organic photovoltaics or any other suitable thin film photovoltaic. The PV collector backing 105 is dark for optimal absorption of solar radiation through the transparent or translucent heat transmission bladder 103 to which it is attached. The PV backing 105 is capable of collecting visible light due to the transparent or translucent nature of the heat transmission bladder 103. The PV backing 105 transfers created power to a battery 106 for storage via the system control block 107 that controls power exchanged between components within the solar power generator and water heating system 100. The battery 106 may be a 24-volt direct current (DC) battery and may include an outlet for consuming the stored power.

The solar power generator and water heating system 100 may also include a PV panel 108. The PV panel 108 may be made from materials similar to that of the PV backing 105. The PV panel 108 may also convert visible light to power for consumption by the solar power generator and water heating system 100 or general use. Power generated from the PV backing 105 and/or the PV panel 108 may be used to power one or more heating elements 112. The heating elements 112 may be used to generate heat in order to heat the use water 110. In one embodiment, the heating elements 112 may be direct current (DC) heating elements.

As shown in FIGURE 1, the system control block 107 may control the power exchanged between various components of the solar power generator and water heating system 100. For example, the system control block 107 may control the power extracted from the PV backing 105 of the PV bladder 102 and stored in the battery 106. In another example, the system control block 107 may control the power extracted from the PV panel 108 and transferred to the battery 106. In a further example, the system control block 107 may control the transfer of power from the battery 106 to the heating elements 112 and/or to the pump 114. In addition to controlling the exchange and/or transfer of power within the solar power generator and water heating system 100, the system control block 107 may also be used to regulate and/or monitor such power transfers/exchanges. The control system block 107 may include a central processing unit and a memory along with other components to control power transfer/exchanges.

The solar power generator and water heating system 100 may use a container 120 to house the pump 114, use water 110, heat exchanger 104, battery 106, heating elements 112, system control block 107, and PV panel 108. During transport or non-use, the container 120 may also be used to stow the PV bladder 102. According to one embodiment, the container 120 may be a conventional pallet of any size commonly used for the transport and storage of equipment and goods. The container 120 may also be specifically configured or customized for hand carrying, pushing, or pulling by multiple individuals, including handles and/or wheels or skids.

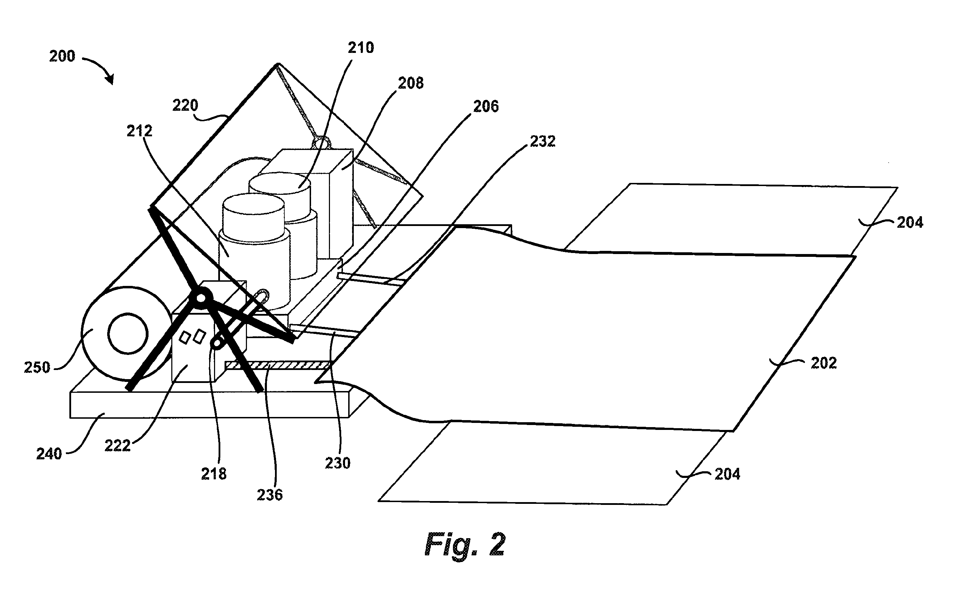

FIGURE 2 illustrates an embodiment of a solar power generator and water heating system 200. As discussed above, the portable solar power generator and water heating system 200 includes a PV bladder 202. The PV bladder 202 may be used to absorb infrared radiation to generate heat via a heat transmission bladder (not shown) and absorb visible light to generate power via a PV backing (not shown). The dimension of the PV bladder 202 may vary depending on the amount of heat transfer fluid desired to be circulated through the PV bladder 202. For example, the PV bladder 202 may have a dimension of 4.9 m by 2.3 m (16 feet by 7.58 feet). The PV bladder 202 may absorb solar radiation once the PV bladder 202 is un-rolled in a sunny location.

Any heat collected through the absorption of solar radiation by the PV bladder 202 may be transferred to water storage tanks 210 and 212 by circulating the heat transfer fluid in the PV bladder 202 through a heat exchanger 206 that may be in thermal contact with the water storage tanks 210 and 212. The portable solar power generator and water heating system 200 may use one or more water pumps 208 to circulate the heat transfer fluid through the heat exchanger 206 via heated fluid transfer conduit 230. The portable solar power generator and water heating system 200 may also use the one or more water pumps 208 to circulate exchanged heat transfer fluid from the heat exchanger 206 back to the PV bladder 202 via ambient fluid transfer conduit 232. The heat exchanger 206 may be a flat plate heat exchanger or any other suitable instrument for exchanging heat.

The water storage tanks 210 and 212 may be filled with water via an ambient water inlet (not shown). The water storage tanks 210 and 212 may be interconnected and water may be exchanged between the water storage tanks 210 and 212. The water storage tanks 210 and 212 may be the same size or, alternatively, may vary in size. For example, water storage tank 210 may be smaller in comparison to water storage tank 212. The water storage tank 210 may be used to provide heated water for use more rapidly than the water storage tank 212 due to the volume of water being heated in both tanks. Accordingly, the water storage tank 210 may provide some amount of heated water, for example, 22.7 l (six gallons), for consumption in a shorter period, for example, five hours, while the larger water storage tank 212 is being heated. One or more heating elements (not shown) may be used with the water storage tank 210 to further reduce the water heating time. The one or more water pumps 208 may also be used to provide water pressure to extract the heated water from the water storage tank 210 and/or water storage tank 212 at a heated water outlet 218 that is connected to water storage tank 210 (not shown) and/or water storage tank 212.

Any power generated through the absorption of visible light by the PV bladder 202 may be transferred to a direct current (DC) power unit 222 via a power control block (not shown) and a power conduit 236. The DC power unit 222 may include power control logic and one or more power outlets. The power generated through the absorption of visible light by the PV bladder 202 may also be used for general consumption by and/or operating the solar power generator and water heating system 200 via the power control block.

The portable solar power generator and water heating system 200 may also include one or more foldout PV collectors 204. The foldout PV collectors 204 may be made of a material similar to the material used to create the PV backing of the PV bladder 202. In one embodiment, each of the PV collectors 204 may be 2 m by 4 m (6.5 feet by 13 feet), thereby providing an additional collection area of about 15.8 m² (170 square feet). The foldout PV collectors 204 may collect visible light that is converted, together with the visible light collected by the PV bladder 202, to power which may be used to charge DC power unit 222 via the power control block and power conduit 236.

In addition to the foldout PV collectors 204, the portable solar power generator and water heating system 200 may also include a rigid PV panel 220. The PV panel 220 may vary in size. For example, the PV panel 220 may have the dimensions of 1.8 m by 1.5m (6.4 feet by 5.4 feet), thereby providing an additional collection area of about 3.3 m² (35 square feet). The PV panel 220 may be rotatable in order to tilt the PV panel 220 in a direction of incoming sunlight. The PV panel 220 may be positioned to shade the various components of the portable solar power generator and water heating system 200 during daylight hours and provide insulation for the water storage tanks 210 and 212 during the night. Converted power created by the PV panel 220 may also charge the DC power unit 222 via the power control block. The power generated by the PV backing of the PV bladder 202, the one or more foldout PV collectors 204, and the PV panel 220 may also be used to operate the one or more pumps 208, transfer water between water storage tanks 210 and 212, and operate one or more heating elements 112 (not shown).

For example, the PV backing of the PV bladder 202, the foldout PV collectors 204, and PV panel 220 may convert approximately nine kilowatt-hours of energy within a 24-hour period in a given location. This energy could be used to operate the one or more water pumps 208, which may use four or more kilowatt-hours of energy to operate within a 24-hour period in a given location. A portion of the nine kilowatt-hours of collected energy may also be used to operate heating elements that may be attached to the water storage tanks 210 and 212, which may use three or more kilowatt-hours of energy to operate. A portion of the nine kilowatt-hours of energy may be used to operate various valves and controls of the portable solar power generator and water heating system 200. The remaining energy from the nine kilowatt-hours of collected energy may be stored in the DC power unit 222. Using the heating elements 112 and heat exchanged from the heat transmission bladder of the PV bladder 202, the portable solar power generator and water heating system 200 may heat water to a given temperature for consumption, for example, 189 l at 38 °C (fifty gallons at 100 degrees Fahrenheit (F)).

The portable solar power generator and water heating system 200 may utilize a second PV bladder 202 and a second set of foldout PV collectors 204, illustrated in a stowed configuration 250, to also provide heated water and power for use. When both sets of PV bladders 202 and foldout PV collectors 204 are in a stowed configuration 250, the overall size of the portable solar power generator and water heating system 200 is reduced easing the logistics for transporting the portable solar power generator and water heating system 200. Accordingly, when in the stowed configuration 250, the portable solar power generator and water heating system 200 may be housed on a container 240 for transport.

In one embodiment, the portable solar power generator and water heating system 200 may be used without filling the PV bladder 202 with the heat transfer fluid. In this configuration, the portable solar power generator and water heating system 200 may provide heated water using the heating elements 112 (shown in FIGURE 1) as well as power. In another embodiment, the solar power generator and water heating system 200 does not supply heated water but, rather, solely provides power. As such, this design also does not require the heating elements 112 to be operational.

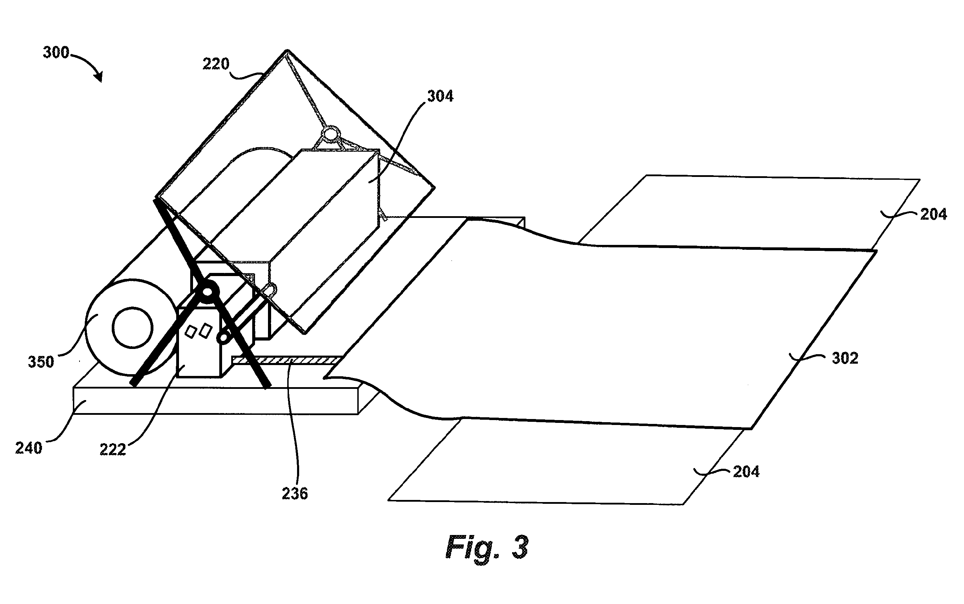

FIGURE 3 illustrates a portable solar power generator system 300 not according to the present invention for solely providing power. The portable solar power generator 300 may include one or more foldout PV collectors 204. The foldout PV collectors 204 may be wide enough to create wings in relation to a PV collector 302. The PV collector 302 may be made from the same material in which the foldout PV collectors 204 are made. The PV collector 302 may vary in size. For example, the PV collector 302 may have dimensions of 20 m by 2.3 m (66 feet by 7.58 feet). The foldout PV collectors 204 and PV collector 302 may collect visible light and convert the received visible light to power that may be used to charge DC power unit 222 and battery 304 using the power control block (not shown) and power conduit 236 and operate various components of the portable solar power generator system 300 using the power control block. The battery 304 may be a 24-volt direct current (DC) battery and include one or more batteries and inverters. In addition to the foldout PV collectors 204 and PV collector 302, the portable solar power generator system 300 may also include the PV panel 220. Converted power created by the PV panel 220 may also charge DC power unit 222 and the battery 304 using the power control block. The power generated by the foldout PV collectors 204, the PV collector 302 and the PV panel 220 may be used for general consumption and to power various components of the portable solar power generator system 300 using the power control block. For example, the foldout PV collector 204, the PV collector 302 and the PV panel 220 may convert approximately fifty kilowatt-hours of energy within a 24-hour period for storage in the battery 304.

The portable solar power generator system 300 may utilize a second PV collector 302 and a second set of foldout PV collectors 204, illustrated in a stowed configuration 350, to provide power for use. When both sets of PV collectors 302 and foldout PV collectors 204 are in a stowed configuration 350, the overall size of the portable solar power generator system 300 is reduced easing the logistics for transporting the portable solar power generator system 300. Accordingly, when in the stowed configuration 350, the portable solar power generator system 300 may be housed on a container 240 for transport.

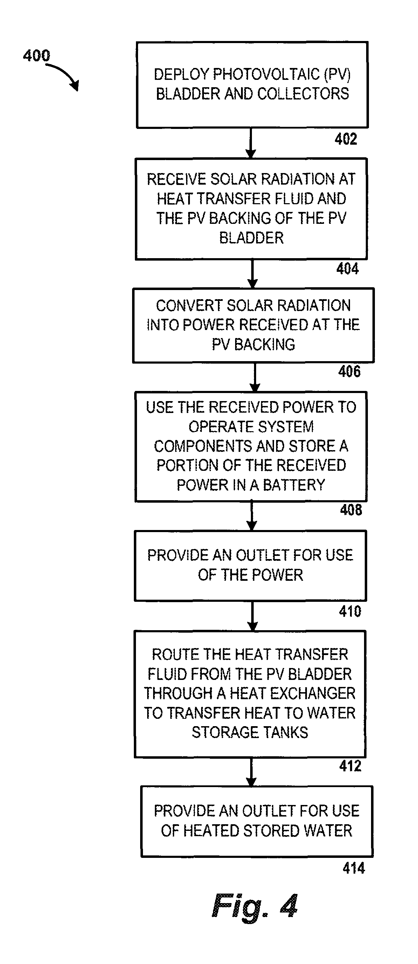

FIGURE 4 is a flow diagram showing a routine 400 of one illustrative process disclosed herein for generating power and providing heated water from solar radiation. The process references the solar power generator and water heating system 100, 200 of FIGURES 1 and 2, respectively. It should also be appreciated that more or fewer operations may be performed than shown in the figures and described herein. These operations may also be performed in a different order than those described herein.

The routine 400 begins at operation 402, where the PV bladder 202 and the one or more foldout PV collectors 204 are deployed. At operation 404, the PV bladder 202, the one or more foldout PV collectors 204 and the PV panel 220 receive solar radiation, for example, infrared radiation and visible light, via the heat transfer fluid and the PV material used by the PV bladder 202, the one or more foldout PV collectors 204 and the PV panel 220. At operation 406, solar radiation absorbed by the PV bladder 202, the PV collectors 204, and the PV panel 220 is converted to power. At operation 408, the converted power is provided for use by the components of the portable solar power generator and water heating system 200, for example, to operate the water pumps 208 and the heating elements 112, and a portion of the converted power is stored in the DC power unit 222. At operation 410, the converted power is also provided for general consumption via a power outlet. At operation 412, the heat transfer fluid is routed through the heat exchanger 206 to transfer heat from the heat transfer fluid to water stored in the water storage tanks 210 and 212. At operation 414, the heated water is provided for general consumption. The operation 400 subsequently ends.

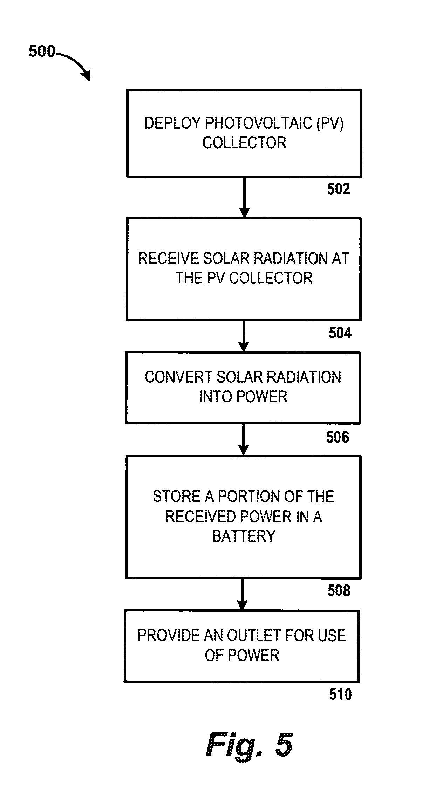

FIGURE 5 is a flow diagram showing a routine 500 that illustrates aspects of one illustrative process disclosed herein for generating power from solar radiation. The process references the solar power generator and water heating system 100, 200 of FIGURES 1 and 2, respectively, and the solar power generator system 300. The routine 500 begins at operation 502, where the one or more foldout PV collectors 204 and the PV collector 302 are deployed. At operation 504, the foldout PV collectors 204, the PV collector 302, and the PV panel 220 receive solar radiation. At operation 506, the solar radiation absorbed by the foldout PV collectors 204, the PV collector 302 and the PV panel 220 is converted to power. At operation 508, the converted power is stored in the DC power unit 222 and the battery 304. At operation 510, the converted power is also provided for use by components of the portable solar power generator system 300 and for general consumption. The operation 500 subsequently ends.

It should be clear from the above disclosure that the portable solar power generator and water heating system 100, the portable solar power generator and water heating system 200 encompassed by the claims below, and the portable solar power generator system 300 described herein provide an improvement in operating efficiency over conventional systems, effectively reducing operating costs, reducing logistical costs associated with transporting fuel, and decreasing the casualty risks corresponding with the hazardous transportation of fuel to forward operating bases. The portable solar power generator and water heating system 100, the portable solar power generator and water heating system 200, and the portable solar power generator system 300 utilizes solar radiation to provide heated water and/or provide power at a base, reducing fuel consumption rates of the base as compared to traditional generator sets. The portable solar power generator and water heating system 100, the portable solar power generator and water heating system 200, the portable solar power generator system 300 may be modular and components of each system may be exchanged or interchanged.

The method for heating water and generating power, is defined in claim 1. Dependent claims 2-5 indicate preferred embodiments of the method.

The solar power and water generation system is defined in claim 6. Dependent claims 7-15 indicate preferred embodiments of the system.

The subject matter described above is provided by way of illustration only and should not be construed as limiting. Various modifications and changes may be made to the subject matter described herein without following the example embodiments and applications illustrated and described, and without departing from the scope of the present invention, which is set forth in the following claims.

## Claims

1. A method for heating water and generating power, the method comprising:
deploying (402, 502) a photovoltaic (PV) bladder (102, 202) from a stowed configuration (250, 350), the PV bladder comprising a heat transmission bladder (103) and a PV backing (105), wherein the heat transmission bladder is located on top of the PV backing;
routing (412) a heat transfer fluid (109) through the heat transmission bladder;
receiving (404, 504) solar radiation at the PV bladder;
routing (412) the heat transfer fluid from the heat transmission bladder to a heat exchanger (104, 206); and
transferring (412) heat from the heat transfer fluid via the heat exchanger to water (110) stored within one or more water storage tanks (210, 212).

2. The method of claim 1, further comprising:
converting (408, 506) the solar radiation received at the PV bladder (102, 202) to power; and
storing (508) the power in a direct current (DC) power unit (222).

3. The method of claim 1, wherein the heat transmission bladder (103) is a translucent bladder.

4. The method of claim 2, further comprising providing (510) the power to operate one or more heating elements (112) for heating the water (110) stored within the one or more water storage tanks (210, 212).

5. The method of claim 2 or 4, further comprising providing (510) the power to operate one or more pumps (114) for circulating the heat transfer fluid (109) between the heat transmission bladder (103) and the heat exchanger (104, 206).

6. A portable solar power and water generation system (100, 200), comprising:
a PV bladder (102, 202) comprising:
a heat transmission bladder (103) configured to absorb solar radiation through a heat transfer fluid (109) filling the heat transmission bladder; and
a PV backing (105) configured to convert solar radiation absorbed through the PV backing into power, wherein the heat transmission bladder is located on top of the PV backing;
a heat exchanger (104, 206) to transfer heat from the heat transfer fluid to water (110) stored in one or more water storage tanks (210, 212); and
a DC power unit (222) for storing power converted by the PV bladder.

7. The power and water generation system (100, 200) of claim 6, further comprising one or more pumps (114, 208) to circulate the heat transfer fluid (109) between the heat transmission bladder (103) and the heat exchanger (104, 206).

8. The power and water generation system (100, 200) of claim 7, wherein the one or more pumps (114, 208) provide pressure for extracting heated water (110) from the one or more water storage tanks (210, 212).

9. The power and water generation system (100, 200) of any one of claims 6 to 8 , wherein the heat transmission bladder is comprised of a fluoride polymer.

10. The power and water generation system (100, 200) of claim 9, wherein the fluoride polymer is ethylene tetrafluoroethylene.

11. The power and water generation system (100, 200) of claim 9 and 10, wherein the fluoride polymer transmits greater than 50% of the visible spectrum through the fluoride polymer.

12. The power and water generation system (100, 200) of any one of claims 6 to 11, wherein the PV backing (105)is comprised of a thin film photovoltaic material.

13. The power and water generation system (100, 200) of claim 12, wherein the thin film photovoltaic material is at least one of copper indium gallium selenide material, tandum junction amorphous silicon material, or cadmium telluride material.

14. The power and water generation system (100, 200) of any one of claims 6 to 13, further comprising one or more foldout PV collectors (204) to convert solar radiation into power.

15. The power and water generation system (100, 200) of any one of claims 6 to 14, further comprising a rigid PV panel (220) to convert solar radiation into power.

## Patentansprüche

1. Verfahren zum Erwärmen von Wasser und Erzeugen von Strom, wobei das Verfahren umfasst:
Entfalten (402, 502) eines photovoltaischen (PV) Balgs (102, 202) aus einer verstauten Konfiguration (250, 350), wobei der PV-Balg einen Wärmeübertragungsbalg (103) und eine PV-Rückschicht (105) umfasst, wobei der Wärmeübertragungsbalg oberhalb der PV-Rückschicht angeordnet ist;
Leiten (412) eines Wärmetransferfluids (109) durch den Wärmeübertragungsbalg;
Empfangen (404, 504) von Sonnenstrahlung am PV-Balg;
Leiten (412) des Wärmetransferfluids vom Wärmeübertragungsbalg zu einem Wärmetauscher (104, 206) ;
Übertragen (412) von Wärme vom Wärmetransferfluid über den Wärmetauscher auf Wasser (110), das innerhalb eines oder mehrerer Wasserspeichertanks (210, 212) gespeichert wird.

2. Verfahren nach Anspruch 1, ferner umfassend:
Umwandeln (408, 506) der am PV-Balg (102, 202) empfangenen Sonnenstrahlung in Strom; und
Speichern (508) des Stroms in einer Gleichstrom (GS)-Stromeinheit (222).

3. Verfahren nach Anspruch 1, wobei der Wärmeübertragungsbalg (103) ein durchscheinender Balg ist.

4. Verfahren nach Anspruch 2, ferner umfassend ein Bereitstellen (510) des Stroms, um ein oder mehrere Heizelemente (112) zum Erwärmen des Wassers (110) bereitzustellen, das innerhalb des einen oder der mehreren Wasserspeichertanks (210, 212) gespeichert wird.

5. Verfahren nach Anspruch 2 oder 4, ferner umfassend ein Bereitstellen (510) des Stroms, um eine oder mehrere Pumpen (114) zum Zirkulierenlassen des Wärmetransferfluids (109) zwischen dem Wärmeübertragungsbalg (103) und dem Wärmetauscher (104, 206) zu betreiben.

6. Tragbares Solarstrom- und Wassererzeugungssystem (100, 200), umfassend:
einen PV-Balg (102, 202), der umfasst:
einen Wärmeübertragungsbalg (103), der so konfiguriert ist, dass er durch ein Wärmetransferfluid (109), das den Wärmeübertragungsbalg füllt, Sonnenstrahlung absorbiert; und
eine PV-Rückschicht (105), die so konfiguriert ist, dass sie Sonnenstrahlung, die von der PV-Rückschicht absorbiert wird, in Strom umwandelt, wobei der Wärmeübertragungsbalg oberhalb der PV-Rückschicht angeordnet ist;
einen Wärmetauscher (104, 206) zum Übertragen von Wärme vom Wärmetransferfluid auf Wasser (110), das in einem oder mehreren Wasserspeichertanks (210, 212) gespeichert wird; und
eine GS-Stromeinheit (222) zum Speichern des durch den PV-Balg umgewandelten Stroms.

7. Strom- und Wassererzeugungssystem (100, 200) nach Anspruch 6, ferner umfassend eine oder mehrere Pumpen (114, 208) zum Zirkulierenlassen des Wärmetransferfluids (109) zwischen dem Wärmeübertragungsbalg (103) und dem Wärmetauscher (104, 206).

8. Strom- und Wassererzeugungssystem (100, 200) nach Anspruch 7, wobei die eine oder die mehreren Pumpen (114, 208) Druck zum Extrahieren von erwärmtem Wasser (110) aus dem einen oder den mehreren Wasserspeichertanks (210, 212) bereitstellen.

9. Strom- und Wassererzeugungssystem (100, 200) nach einem der Ansprüche 6 bis 8, wobei der Wärmeübertragungsbalg ein Fluoridpolymer umfasst.

10. Strom- und Wassererzeugungssystem (100, 200) nach Anspruch 9, wobei das Fluoridpolymer Ethylentetrafluorethylen ist.

11. Strom- und Wassererzeugungssystem (100, 200) nach Anspruch 9 und 10, wobei das Fluoridpolymer über 50 % des sichtbaren Spektrums durch das Fluoridpolymer durchlässt.

12. Strom- und Wassererzeugungssystem (100, 200) nach einem der Ansprüche 6 bis 11, wobei die PV-Rückschicht (105) ein photovoltaisches Dünnfilmmaterial umfasst.

13. Strom- und Wassererzeugungssystem (100, 200) nach Anspruch 12, wobei das photovoltaische Dünnfilmmaterial mindestens eines von einem Kupfer-Indium-Gallium-Selenid-Material, einem amorphen Tandem-Junction-Siliciummaterial oder einem Cadmium-Tellurid-Material ist.

14. Strom- und Wassererzeugungssystem (100, 200) nach einem der Ansprüche 6 bis 13, ferner umfassend einen oder mehrere ausgeklappte PV-Kollektoren (204) zum Umwandeln von Sonnenstrahlung in Strom.

15. Strom und Wassererzeugungssystem (100, 200) nach einem der Ansprüche 6 bis 14, ferner umfassend ein starres PV-Panel (220) zum Umwandeln von Sonnenstrahlung in Strom.

## Revendications

1. Procédé de chauffage d'eau et de production d'énergie, le procédé comprenant :
le déploiement (402, 502) d'une vessie photovoltaïque (PV) (102, 202) depuis une configuration rangée (250, 350), la vessie PV comprenant une vessie de transmission de chaleur (103) et une doublure PV (105), la vessie de transmission de chaleur étant située au-dessus de la doublure PV ;
l'acheminement (412) d'un fluide de transfert de chaleur (109) à travers la vessie de transmission de chaleur ;
la réception (404, 504) du rayonnement solaire au niveau de la vessie PV ;
l'acheminement (412) du fluide de transfert de chaleur de la vessie de transmission de chaleur à un échangeur de chaleur (104, 206) ; et
le transfert (412) de chaleur du fluide de transfert de chaleur par l'échangeur de chaleur à de l'eau (110) stockée à l'intérieur d'un ou plusieurs réservoirs de stockage d'eau (210, 212).

2. Procédé de la revendication 1, comprenant en outre :
la conversion (408, 506) du rayonnement solaire reçu au niveau de la vessie PV (102, 202) en énergie ; et
le stockage (508) de l'énergie dans une unité d'alimentation à courant continu (CC) (222).

3. Procédé de la revendication 1, dans lequel la vessie de transmission de chaleur (103) est une vessie translucide.

4. Procédé de la revendication 2, comprenant en outre la fourniture (510) de l'énergie pour faire fonctionner un ou plusieurs éléments chauffants (112) afin de chauffer l'eau (110) stockée à l'intérieur du ou des réservoirs de stockage d'eau (210, 212).

5. Procédé de la revendication 2 ou 4, comprenant en outre la fourniture (510) de l'énergie pour faire fonctionner une ou plusieurs pompes (114) afin de faire circuler le fluide de transfert de chaleur (109) entre la vessie de transmission de chaleur (103) et l'échangeur de chaleur (104, 206).

6. Système de production d'énergie solaire et d'eau portatif (100, 200), comprenant :
une vessie PV (102, 202) comprenant :
une vessie de transmission de chaleur (103) configurée pour absorber le rayonnement solaire au moyen d'un fluide de transfert de chaleur (109) remplissant la vessie de transmission de chaleur ; et
une doublure PV (105) configurée pour convertir le rayonnement solaire absorbé à travers la doublure PV en énergie, la vessie de transmission de chaleur étant située au-dessus de la doublure PV ;
un échangeur de chaleur (104, 206) servant à transférer la chaleur du fluide de transfert de chaleur à de l'eau (110) stockée dans un ou plusieurs réservoirs de stockage d'eau (210, 212) ; et
une unité d'alimentation CC (222) servant à stocker l'énergie convertie par la vessie PV.

7. Système de production d'énergie et d'eau (100, 200) de la revendication 6, comprenant en outre une ou plusieurs pompes (114, 208) pour faire circuler le fluide de transfert de chaleur (109) entre la vessie de transmission de chaleur (103) et l'échangeur de chaleur (104, 206).

8. Système de production d'énergie et d'eau (100, 200) de la revendication 7, dans lequel la ou les pompes (114, 208) fournissent de la pression pour extraire l'eau chauffée (110) du ou des réservoirs de stockage d'eau (210, 212).

9. Système de production d'énergie et d'eau (100, 200) de l'une quelconque des revendications 6 à 8, dans lequel la vessie de transmission de chaleur est composée d'un polymère de fluorure.

10. Système de production d'énergie et d'eau (100, 200) de la revendication 9, dans lequel le polymère de fluorure est l'éthylène-tétrafluoroéthylène.

11. Système de production d'énergie et d'eau (100, 200) de la revendication 9 et 10, dans lequel le polymère de fluorure transmet plus de 50 % du spectre visible à travers le polymère de fluorure.

12. Système de production d'énergie et d'eau (100, 200) de l'une quelconque des revendications 6 à 11, dans lequel la doublure PV (105) est composée d'un matériau photovoltaïque en couche mince.

13. Système de production d'énergie et d'eau (100, 200) de la revendication 12, dans lequel le matériau photovoltaïque en couche mince est un matériau en séléniure de cuivre-indium-gallium, et/ou un matériau en silicium amorphe à jonction tandem, et/ou un matériau en tellurure de cadmium.

14. Système de production d'énergie et d'eau (100, 200) de l'une quelconque des revendications 6 à 13, comprenant en outre un ou plusieurs collecteurs PV dépliés (204) pour convertir le rayonnement solaire en énergie.

15. Système de production d'énergie et d'eau (100, 200) de l'une quelconque des revendications 6 à 14, comprenant en outre un panneau PV rigide (220) pour convertir le rayonnement solaire en énergie.
